# EUROPEAN PATENT SPECIFICATION

(11) **EP 1 531 626 B1**
(45) Date of publication and mention of the grant of the patent: **02.01.2008**
(21) Application number: 03026045.9
(22) Date of filing: 12.11.2003
(51) Int. Cl.: H04N 7/16

(54) **Automatic summarisation for a television programme suggestion engine based on consumer preferences**
Automatische Zusammenfassung für eine Vorschlagsmachine von Fernsehprogrammen beruhend auf Verbraucherpräferenzen
Récapitulation automatique pour un moteur de suggestion de programmes de télévision basée sur les préférences des consommateurs

(43) Date of publication of application: 18.05.2005
(73) Proprietor: Sony Deutschland GmbH, 10785 Berlin (DE)
(72) Inventor: Goronzy, Silke Sony International (Europe) GmbH, 70327 Stuttgart (DE); Kemp, Thomas Sony International (Europe) GmbH, 70327 Stuttgart (DE); Kompe, Ralf Sony International (Europe) GmbH, 70327 Stuttgart (DE); Lam, Yin Hay Sony International (Europe) GmbH, 70327 Stuttgart (DE); Marasek, Krzysztof Sony International (Europe) GmbH, 70327 Stuttgart (DE); Tato, Raquel, Sony International (Europe) GmbH, 70327 Stuttgart (DE)
(74) Representative: Körber, Martin Hans

(56) References cited:
- WO-A-01/33848
- US-A1- 2002 147 782
- US-A1- 2003 049 014
- US-B1- 6 581 207

## Description

The present invention relates to a programme suggestion engine which automatically selects a subset of video signals from a source set of video signals containing recorded TV programmes. In particular, the present invention relates to an automatic programme summary system as a part of the respective programme suggestion engine for automatically creating a summary of a programme forming the content of the source set of video signals based on meta data available for the content.

With the growing number of video channels, it becomes very difficult for a consumer to select and view only those programmes in which he is really interested. Furthermore, the interesting programs are frequently broadcasted at the wrong time, e.g. when the consumer is asleep or at work. Sometimes, two interesting programmes are broadcasted at the same time so that a consumer has to decide in which programme he is interested most. With the possibility of taping programmes on a video recorder, this decision can be altered into which of the two competing programmes he or she is momentarily interested in most, e.g. the possibly important soccer match or the possibly thrilling interesting feature film.

Although a video recorder offers a consumer the liberty to enjoy the programmes of interest at a convenient time, he or she has still to be informed in advance on what will be presented on the various TV channels that can be received. The consumer therefore frequently has to consult a TV programme guide to find out what will be broadcasted at what time. If the programme guide is in printed form, the consumer further has to program the video recorder manually.

In recent years, electronic programme guides (EPG) have been developed as an alternative to print programme guides. An EPG is an application used with appliances for the reception of television programmes that lists current and scheduled programmes which will be available on a multitude of TV channels. An EPG may also be accessed via the Internet. It provides a short summary and a comment for each programme and can be used to program e.g. a video cassette recorder (VCR). An EPG can be regarded as the electronic equivalent of a printed television programme guide.

An EPG is usually accessed with a remote control. It provides a menu for the consumer to view a list of programmes scheduled for the next few hours up to a few of the next days. For the protection of children and young people, parental controls are typically incorporated in the EPG. An EPG typically allows order-per-view programming, search for programmes based on a certain genre and to set a VCR for recording selected programmes. As currently each digital television provider offers its own consumer interface and content for the EPG, the format of the EPG is so far highly dependent on the respective provider. General standards like e.g. the NHP-standard are not yet in force.

One drawback of the printed as well as the electronic television programme guide is, that a consumer still has to look through the programme offers prior to the starting time of the respective programmes. But many times, a consumer does not like to be bothered to go through all the offers presented in the programme guide and prefers to look for an interesting programme just at the time he or she got ready to watch TV, i.e. independent of the broadcasting time of a possibly interesting programme. A consumer is hereby supported by a TV programme suggestion engine which records all TV programmes on the various TV channels which might be of interest to the consumer and prepares a recommendation for the consumer on the basis of the recorded material when requested. The consumer then only has to select those programmes from the recommendation which interest him or her most at that particular moment.

Although a consumer might have a special interest in a certain genre of programmes, it might still be difficult for her or him to decide if she or he is really interested in just the special programme offered, particularly when the actual content of the programme is not known to him like is typically the case with recently taped soccer games or with feature films broadcasted for the first time or something similar like that. An EPG usually will provide some comment on a programme but one cannot rely on it, and sometimes the respective comment may also not be meaningful to the consumer. Due to their nature, taped live sport events are usually not provided with a comment. A consumer is therefore many times forced to view a programme before finding out, that it was not what he would have liked to see at the very special moment.

It is therefore desirable to provide a consumer with some information about important events present in a programme of possible interest. To this respect, a key event detector is used in a programme suggestion engine for verifying the occurrence of particular events in a programme. Usually, the set of video signals recorded for the consumer comprises more than one recommended programme. The recording of the programmes is selected on the basis of information about preferences of the consumer for certain types of programmes. The respective type of programmes is typically defined by a generic term like e.g. sports, feature movies, music, news, shows or the like. But also more detailed genre distinction may be used like e.g. soccer, motor sport or tennis. The recorded source set of video signals is then subdivided into sub-sections, each representing a programme of a particular genre.

The key event detector examines a sub-section for identifying therein all segments corresponding to pre-defined events like e.g. in case of a soccer match corresponding to a goal or a penalty. The key event detector hereto processes the audio channel of the source set of video signals and creates meta data characterising particular signal sequences in the source set of video signals. One typical information available via the meta data is e.g. the generic term of the programme contained in the respective sub-section the meta data refer to.

For identifying the events occurring in a programme, the key event detector first examines the audio signal of the related sub-section for known characteristics allowing a characterisation of the possible origin of certain sections of the audio signal as for instance the section representing speech, music, noise, silence, mood or gender of a speaker or the like. Each such characterised coherent sequence of audio signal forms a sub-unit within the sub-section. Each of the sub-sections is then classified according to its determined type character, and the key event detector creates meta data corresponding to the respective classifications.

The incident represented by a classified sub-unit is usually too isolated to allow at least an idea about the related programme scene being of possible interest or not. A complete scene or event, respectively, usually comprises a sequence of incidents, some which are very characteristic for it. An event of a certain category like e.g. a penalty or goal, a foul or the like is therefore typically defined by a very particular sequence of audio characteristics allowing an identification of the category by examining the characteristics of a succession of classified sub-units.

To identify and categorise important events in the sub-section of the source set of video signals, the key event detector examines only the audio channel of the video signals for strings of one or more classified sub-units which are similar or identical to a string of sub-units used as a definition for a certain event category, like for instance a foul. The term 'string' is hereby used to denote a sequence of according a some order. The comparison of the strings of classified sub-units found in the sub-section with the set of strings defining predetermined event categories yields a rating of the reliability of the respective category allocation. The rating value will be high when the string of classified sub-units is nearly identical with the string defining the event category and will decrease with an increasing mismatch between the examined 5 and the defining string. Strings of classified sub-units which have been allocated to a certain event category are within the context of this application referred to as a segment of the video signals.

As a result of the key event detection, meta data are available which identify certain segments within the source set of video signals that correspond to certain predetermined event categories. Additionally, the reliability of the assessment of events is available by meta data representing a rating value that indicates the degree of conformity of an individual segment with the string of sub-units defining the event category assigned to the segment. The key event detector is thus capable of extracting information from a programme concerning the possible occurrence of predetermined events but is not capable of reducing the information to that what is relevant to a particular consumer.

Document US 6581207 B1 discloses a program content analyzing section in an information filtering unit, whereby said unit is connected with a user's video equipment by a communication line. The program content analyzing section analyzes the contents of broadcast programs from a broadcasting station in terms of substantial information such as video and sound. A collation evaluation section evaluates the similarity between the analyses and a user's profile stored in a profile storage section. A program selecting section transmits the result of program selection to the video equipment in the form of time information.

It is therefore an object of the present invention to provide a system which is able to present to a consumer only the information contained in a certain programme which is of particular interest for the particular consumer.

This object is achieved by the invention as defined in the independent claims.

In a first embodiment of the invention, a method is proposed for defining a subset of video signals from a source set of video signals on the basis of meta data available for the source set of video signals, with the meta data assigning a generic term to a sub-section of the audio channel of the source set of video signals, a class description to one or more sub-units of the sub-section for classifying the origin of the respective sub-unit, a category allocation to a segment, which is formed by a string of one or more classified sub-units of a sub-section, and a rating value to the segment for rating the reliability of the category allocation of the segment. The method includes steps for selecting segments of a sub-section with a rating value above a threshold value, assigning a priority value to each category, and specifying a first subset of video signals by defining an arrangement of selected segments by an order based on the respective priority and rating values related to each segment.

In a second embodiment of the present invention an automatic programme summary apparatus is provided for defining a subset of video signals from a source set of video signals on the basis of meta data available for the source set of video signals, with the meta data assigning a generic term to a sub-section of the audio channel of the source set of video signals, a class description to one or more sub-units of the sub-section for classifying the origin of the respective sub-unit, a category allocation to a segment formed by a string of one or more classified sub-units of a sub-section, and a rating value to the segment for rating the reliability of the category allocation of the segment. The apparatus contains a selecting means for selecting individual segments from a sub-section of the source set of video signals, a meta data reading means for reading the meta data related to a selected segment, a priority assignment means for assigning a priority value to each category, a decision means for deciding if a selected segment is to be added to the subset of video signals by evaluating the rating value of the segment with respect to a threshold value, a ranking means for specifying the order in which the segments decided to be added to the subset of video signals are to be arranged, whereby the order is based on the priority value and rating value related to each respective sequence, and an arrangement means for arranging the segments decided to be added to the subset of video signals according to the order set by the ranking means.

The present invention is further implemented by a software product comprising a series of commands which are adapted to be processed by a data processing means of an automatic programme summary apparatus according to the present invention in order to execute a method according to the present invention.

The present invention advantageously allows to define a selection from the events detected by the key event detector based on the reliability by which a category of an event is identified and based on the priority which is assigned to the respective category of the event so that the invention yields a summary of the important events of a programme only.

Further developments of the present invention are set forth in the dependent claims.

The most important events of a programme are preferably presented first. Hereto, the arrangement of segments in the first subset of video signals is specified by order of the priority value related to each category of the segments. Within the category of a given priority, the segments are then arranged by chronological order or according to the rating value assigned to each segment.

Alternatively, the importance of the events may not primarily be defined by the priority value of the category to which the segment belongs, but by an importance value defined individually for each segment. The importance value is then formed by a weighting of the priority value related to the category of the respective segment with the rating value assigned to the segment. To achieve a presentation of events according to the assigned importance, the arrangement of the segments in the first subset of video signals is hereto specified by order of importance.

For a short overview of a programme's content, the summary is preferably limited to a certain period of time. Depending on the time limit set, only a limited selection of the important events can be presented. This is preferably achieved by selecting only those events, which can be identified with a high reliability. Therefore, the threshold value is advantageously redefined in relation to the time limit specified for the total length of the first subset of video signals.

The summary of events collected in the first subset of video signals may advantageously be restricted according to a consumer request by forming a second subset of video signals from the first subset of video signals according to a response mark obtained from the consumer on request. In a preferred embodiment of the present invention, the priority values are hereto recalculated on the basis of one or more response marks allowing to adapt future programme summaries to changing consumer preferences. The preferences of a consumer are preferably registered by means of a consumer profile which is formed on the basis of the response marks obtained from a particular consumer. Hereby, it is possible to create consumer-specific programme summaries which reflect the individual preferences of each consumer.

In the following description, the present invention is explained in more detail with respect to special embodiments and in relation to the enclosed drawings, in which:
- Fig. 1: shows a schematic representation of a suggestion engine with an automatic programme summary system according to the present invention,
- Fig. 2: shows the processing of video signals of a key event detector used in a suggestion engine of Fig. 1,
- Fig. 3: shows the partitioning of an audio stream and the assignment of meta data to certain partitions of the audio stream as performed by the key event detector,
- Fig. 4: shows the elementary steps of a method according to the present invention in a flow chart,
- Fig. 5: shows the elementary step of a special embodiment of the present invention in form of a flow chart,
- Fig. 6: shows an automatic programme summary apparatus according to the present invention,
- Fig. 7: shows a further embodiment of an automatic programme summary system according to the present invention, and
- Fig. 8: shows a schematic representation of an implementation of an apparatus according to the present invention.

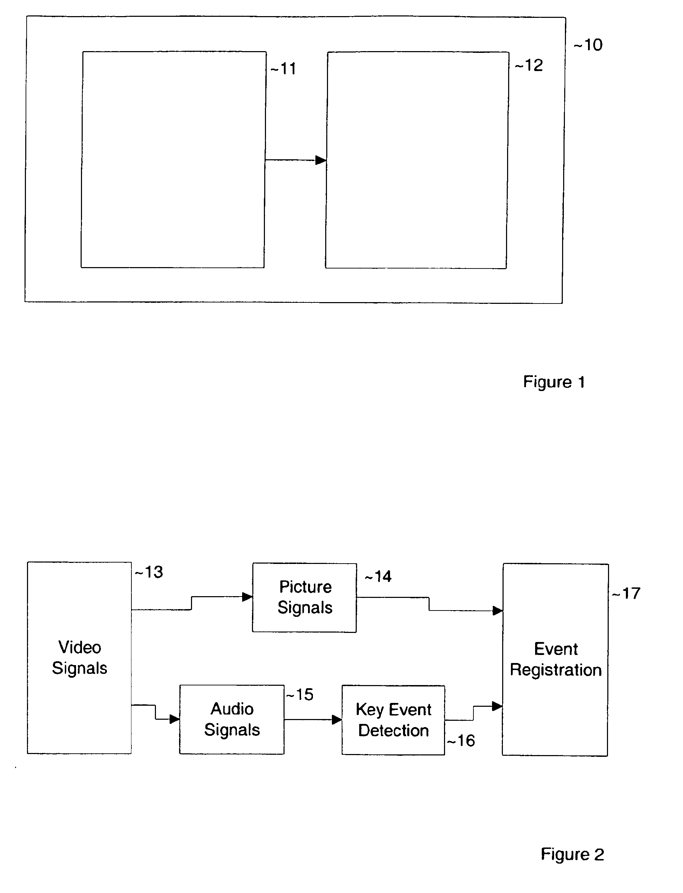

An automatic programme summary system 12 according to the present invention is typically used within a programme suggestion engine 10 as shown in Fig. 1 to create a summary from video data available to the programme suggestion engine. The summary might be presented to a consumer to inform him about the most interesting events found in a programme. The events from which the summary is formed are provided by a key event detector 11 which is a further part of the programme suggestion engine 10.

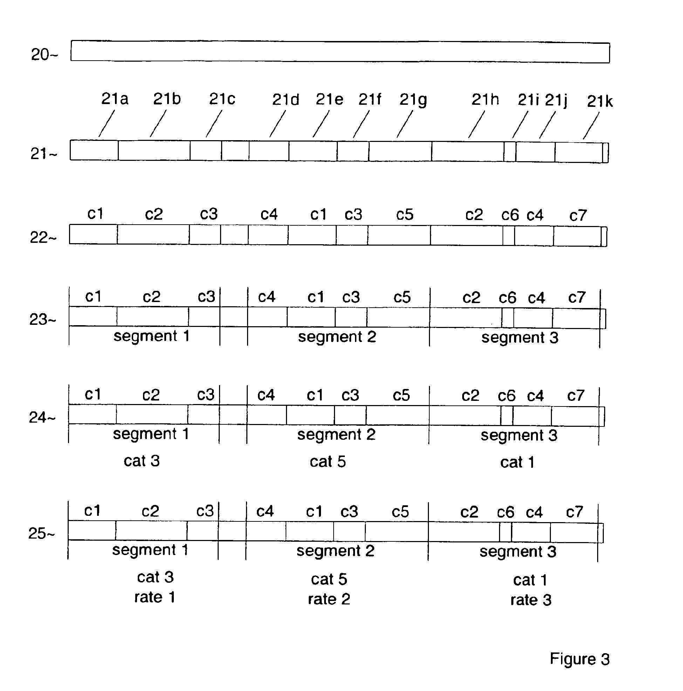

A key event detector 11 identifies and categorises certain events of interest in a source set of video signals 13 as will be described with reference to Fig. 2 and Fig. 3. Video signals 13 are either provided by a TV broadcasting station, a storage medium like a DVD or a hard disk or by other kinds of storage media as e.g. a video tape for a VCR. Dependent on their respective origin, the video signals 13 are either provided in analogue or digital form. A video signal is a carrier for a multi-lateral information containing speech, audio, text, and colour patterns defining the shape and the motion of objects. The respective multi-lateral information is typically referred to as the content of the video signal. Examples for a content are for instance a feature movie or a documentary, a news magazine or the like. Information about the structure of the content contained in the video signal may be available within the video signal itself or external to it in an extra channel or data file. This structural information is typically referred to as meta data. Its most common use is the indication of the begin and the end of a certain type of programme like e.g. the begin and end of a soccer match. Further information, like for instance the genre of the programme forming the content of the video signals may also be stored as meta data, particularly, when the video signals have the form of digital video data.

The present invention relies on a key event detector 11 that spots and classifies important events inside a programme forming the content of a set of video signals. As there exists no standard defining something as interesting' because the perception of a programme content is very subjective and thus differs from consumer to consumer, criteria specifying which programmes have to be considered as interesting are kept available in a consumer-specific file. For a first consumer, a respective file may e.g. assign the highest priority to international soccer games, the second highest priority to science fiction television soaps and so on, while for another consumer, the highest priority may perhaps be assigned to news magazines and the second highest priority possibly to martial art movies. A particular consumer interest is not only focused on a certain genre of programmes but very often to specific events within a programme of the genre. Such events could in the case of a soccer game e.g. be a goal, a penalty, a foul, a red or a yellow card. These events are spotted by the key event detector 11 from the video signals of a programme. The key event detection is typically based on the audio channel of the video signals as shown in Fig. 2. The video signals 13 are split up in the picture signals 14 and the audio signals 15. The key event detection 16 examines the audio signals 15 to spot those events in the programme forming the content of the video signals 13, which are of interest to a specific consumer. The key event detection 16 produces meta data to the video signals 13 resulting in video signals with an event registration 17.

A more detailed description of the key event detection is given with reference to Fig. 3. The audio stream 20 of a TV or video signal is first partitioned into a series of sub-units like for instance the indicated sub-units 21a to 21k. Each sub-unit contains an audio signal of a particular origin and therefore of a particular characteristic which is different to the origin and characteristic of the audio signal in the preceding or in the succeeding sub-unit. Next, the sub-units of known audio characteristic are classified by assigning each of them a class (in the example of Fig. 3 one of the classes c1 to c7) which is found to comply with the audio characteristic present in the respective sub-unit. Sometimes a sub-unit may be assigned more than one class, as for instance the characteristic may be interpreted differently with respect to different viewpoints like e.g. the absence of speech may be interpreted as silence as well as noise. Events in a programme are identified by a succession of classes typical for a category to which the event belongs. Therefore, in the next step, the audio stream is searched for successions or strings, respectively, of classes which can be associated with a certain event category like for instance a goal in a soccer match or a romantic scene in a feature movie. As typically no event will exactly follow the scheme set in the category definition, certain variations in the string of classes have to be allowed. Practically, as long as the mismatch between a string of classes defining a category and the strings of classes actually found in the audio stream does not exceed a certain value, the later is still found to belong to the respective category. But the assessment will be afflicted with a certain uncertainty.

To identify the predefined events, the respective strings of classes are identified in the audio stream and combined to segments as shown for the correspondingly processed audio stream 23 in Fig. 3. Next, each segment is assigned a category identifying the type of event represented by the respective segment as shown for the processed audio stream 24. The certainty, by which a segment is assigned an event category is calculated by a so-called confidence measure which is expressed by a rating value as shown for the processed audio stream 25 in Fig. 3.

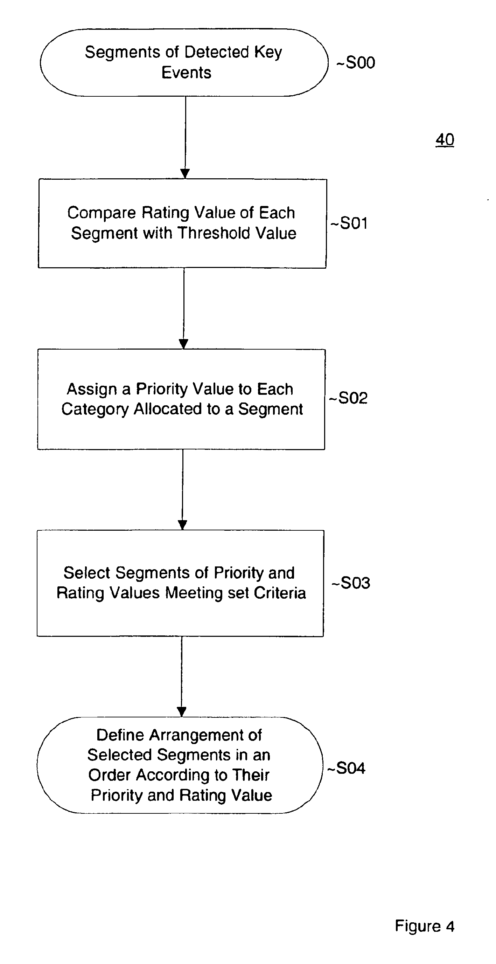

The present invention now forms a summary from the thus identified segments of key events for providing a résumé for a consumer containing the interesting events. The basic steps of a method according to the invention are illustrated in the flowchart 40 of Fig. 4. Starting with the segments categorised and rated by the key event detector in step S00, the rating value of each segment is compared with a given threshold value in step S01. The threshold value is taken from the consumer-specific file mentioned above which, as it contains data related to the preferences of a consumer, is further referred to as consumer profile. If a consumer is only interested in the events with a confidence score close to certainty, the threshold value will be close to the rating value defined for a clear event identification, i.e. a categorisation of the event with nearly absolute certainty. If a consumer is interested in all events which might only possibly be associated to certain categories of events, the threshold value will be closer to a rating value representing a high uncertainty.

As a result of step S01, a subset of segments is defined from the audio stream including all segments from high to low rating values. Next, in step S02 a priority value is assigned to each category which for it's part has been assigned to at least one of the segments of the subset. In the following step S03, the subset is further restricted to only those segments, which priority and rating values meet set criteria as e.g. determined in the consumer profile. The set criteria may e.g. define, that only segments of the two categories with the highest priority value, and for instance within each category only the three segments with the highest rating value are to remain in the subset. Finally, the subset of video signals is defined in step S04 by defining the arrangement of the segments selected, i.e. the segments remaining in the above defined subset, in an order according to the priority and rating values. The arrangement may be done by creating a subset of video signals containing the selected segments in the defined order, but may also be implemented in the form of meta data defining the segments selected for the arrangement and the order in which they are to be presented to a consumer.

It is to be noted that more than one threshold value can be used for selecting the segments according to a method illustrated by the flow chart 40 of Fig. 4. In particular, an individual threshold value may be defined for each event category or for each priority assigned to a category. Thus for a category of events with a high priority, segments with a lower certainty of being identified as belonging to the respective category may be added to the selection of the subset, while for a category with a lower priority value only segments with a high confidence score, i.e. a ranking value corresponding to a low uncertainty will become part of the subset of video signals.

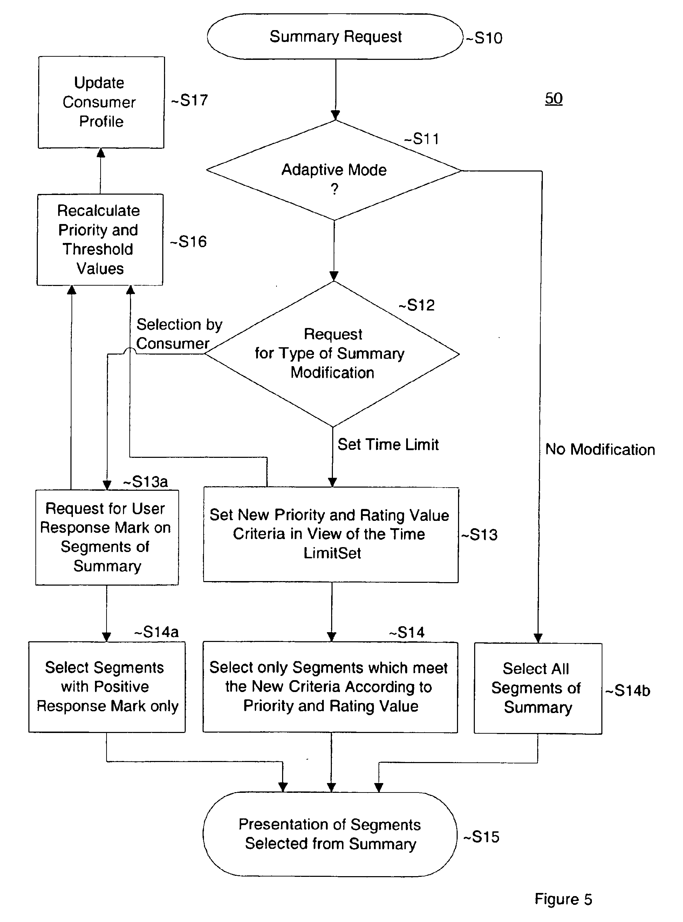

In a further embodiment of the present invention, the method for creating a subset of video signals representing a summary of a programme represented by a source set of video signals adapts the selection of segments according to a consumer input. The elementary steps of a respective method are illustrated in the flow chart 50 of Fig. 5. Starting with a summary request from a consumer in step S10, step S11 decides if the subset of video signal arranged according to what has been described above is presented directly to the consumer or if it is to be modified according to additional consumer input requested in step S12. The decision is typically based on a direct request from the consumer, and if no specification is obtained from the consumer the method proceeds with step S14b, selecting all segments of the previously defined summary for presenting it to the consumer in step S15. The consumer may modify the summary by either setting a time limit in step S12 or by asking to be presented with a shortened résumé of the events before deciding in step S13a if he wants to see a scene in detail or not. The consumer responds by returning a response mark which forms the basis for selecting the really 'interesting' segments in step S14a prior to being presented to the consumer in step S15. Segments or events, respectively, which got a negative response mark are taken from the summary while events with a positive response mark remain in the summary. The response marks obtained in step S13a are further used to update the consumer profile for reflecting possible changes in a consumer's preferences. In detail, the priority and threshold values are re-calculated on the basis of the obtained response marks and the thus re-calculated values are then updated in the consumer profile in step S17.

When a consumer sets a time limit for the summary in step S12, new criteria for assessing the priority and rating values of the segments according to step S03 are set in step S13 on the basis of the actual time limit set. From the given subset of video signals representing the original summary, only those segments which meet the new criteria with respect to the priority and rating values are selected in step S14 and finally presented to the consumer in step S15.

Typically, the selected segments in the subset of video signals are arranged by the order of the priority value assigned to the categories of the segments. Segments with high priority values are placed in front of segments with lower priority values. Within a given category, the segments are preferably arranged in a chronological order, as this reflects the course of events. Sometimes, a consumer is not interested to view the events in the order of their occurrence, but wants to be sure that at least the first segments presented, are correctly assigned to the category. In this case, the segments within a category are arranged by the order of the rating values assigned to each segment such, that the segments with a rating value related to a high certainty come first.

In a different approach, the arrangement of segments in the summary is specified by order of importance the events represented by the segments have for the consumer. As the meaning of importance differs from consumer to consumer, it has to be assessed for each individual consumer individually from data available in his individual profile. The interests of the consumer are best reflected in the priority values assigned to the different categories of events. Assuming, that a consumer prefers to see all events which are somehow related to his favourite category of events like e.g. foul play and goals in a soccer match, the summary will provide her or him with all segments identified to belong to her or his favourite categories; even if the category has been identified with a high uncertainty. From categories of lower priority only the events identified with a high certainty will be added to the summary. The value of importance is thus defined by weighting the priority value related to a segment with the rating value assigned to this segment. Only segments having a minimum value of importance, i.e. segments representing events that comply with the above explained importance standard, are added to the summary. Assumed, the programme for which a summary is to be arranged is a soccer match, and a consumer puts the highest priority to the category of events belonging to goals and the second highest priority to the category of events belonging to foul play, then the system would assign a higher degree of importance to goals than to foul plays. Accordingly, when defining the summary, goal scenes with a confidence score of only 0.7 would be added to the summary while for instance a foul scene with a confidence of 0.8 would be sorted out, because the consumer profile indicates that the consumer is particularly interested in goals and not so much in foul play.

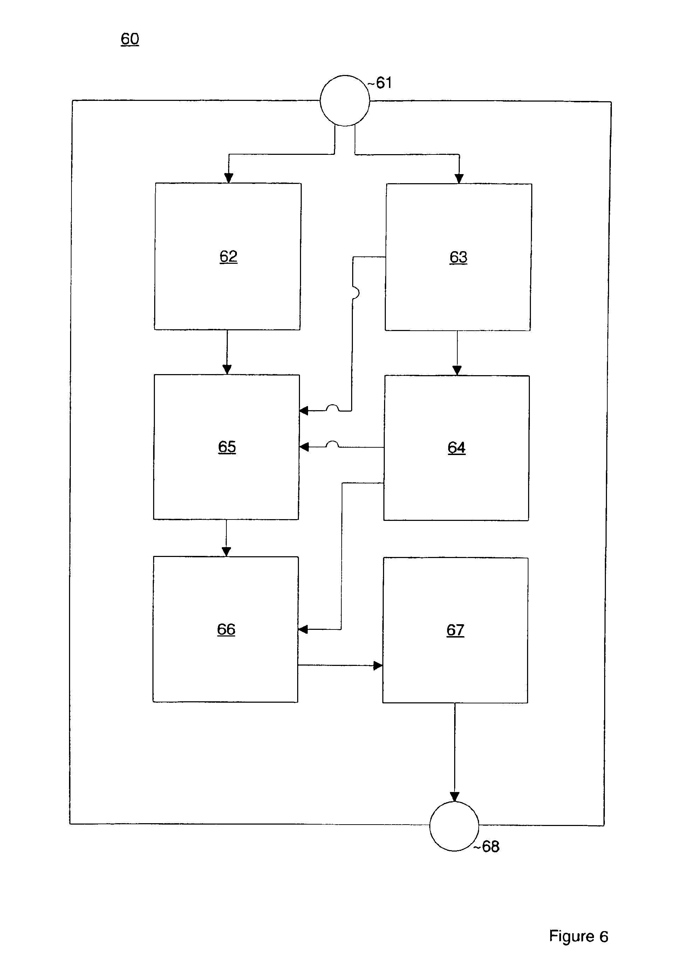

The described method for defining a programme summary is implemented by an automatic programme summary apparatus 60 as e.g. shown in Fig. 6. The video signals as provided by the key event detector 11 are supplied to the video signal input port 61 of the automatic programme summary apparatus 60. According to the preparation done by the key event detector 11, the video signals are partitioned into sub-sections, with each sub-section corresponding to a programme of a certain type or genre. The automatic programme summary apparatus provides a summary for each programme on the basis of the supplied video signals or video data, respectively. The terms 'video signal' or 'video data' hereby include the meta data which contain structural information about the video content. In particular, the meta data are received from the key event detector 11 allowing to identify segments in form of strings of classes as described above in a video data or signal stream. From the video signal input port 61, the video signal is distributed to a selecting means 62 and a meta data reading means 63. Based on the information obtained from the meta data reading means 63, the selecting means 62 selects individual segments of interest from the sub-sections of the source set of video signals as provided by the video signal input port 61. According to the information obtained from a consumer profile, the priority assignment means 64 assigns a priority value to each category found in the video signals by the meta data reading means 63. For each individual segment obtained from the selecting means 62, the decision means 65 obtains the ranking value from the meta data reading means and the priority value from the priority assignment means. Based on the threshold value obtained from the consumer profile, the decision means 65 decides, if the categorisation of the segment has been assessed with the certainty defined by the threshold value. It further checks, if the priority value is sufficiently high to add the segment to the subset of video signals forming the summary of the programme. The ranking means 66 specifies the order by which the segments are to be arranged in the subset of video signals, whereby the order is based on the priority value and the rating value related to each individual segment of the subset. After setting up the order, the segments are arranged in accordance with the order set by the arrangement means 67 and the arrangement is provided to the output port 68 of the automatic programme summary apparatus 60 for further processing.

The order specified by the ranking means 66 is typically given by the priority value related to the category of each segment, and within a given category the chronological order is maintained. Instead of the chronological order, the order within a category may be defined as described above by the rating value assigned to the individual segments. Alternatively, the order within a category may further be defined according to a value of importance evaluated in correspondence to what has been described above.

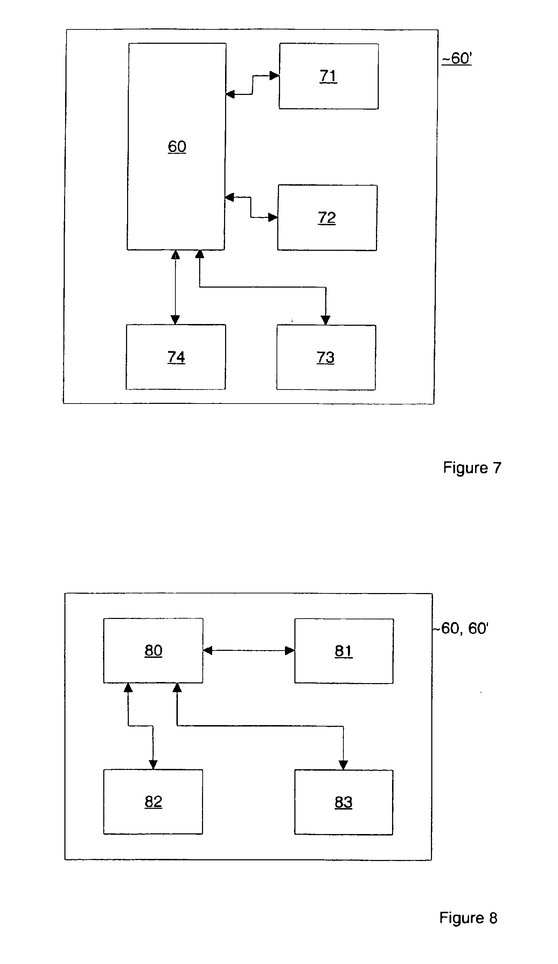

The value of importance is calculated by a calculating means 71 which also performs the calculations necessary for the other means of the automatic programme summary apparatus 60 like for instance the decision means 65. In Fig. 7, the calculation means is shown as a sub-unit of an extended automatic programme summary apparatus 60' to which the previously described apparatus 60 forms a further sub-unit. But as most of the action is performed by the basic automatic programme summary apparatus 60, it is clear that the calculation means 71 may also be an integral part of it. With reference to Fig. 7, a consumer-machine interface 72 is provided with the extended summary apparatus 60' to request and obtain instructions from the consumer like for instance response marks or a setting of a time limit for the summary. According to the consumer input, the restricting means 73 organises an adaptation of the segments provided for a summary with respect to the wishes of the consumer. It hereto has the priority and threshold values obtained from the profiling means 74 for the particular consumer recalculated on the respective input obtained from the consumer via the consumer-machine interface 72 and it updates the consumer profile in the profiling means 74 accordingly. Then, only those segments from the subset of video signals are selected for the final summary which comply with the new values for the priority and threshold.

An apparatus according to the present invention, like the apparatus 60 or 60' is typically realised by means of a data processing equipment as shown in Fig. 8. The automatic programme summary apparatus comprises hereto a processing means which carries out operations defined by commands of a software product defining all necessary steps of a method according to the invention as described above. The data processing means 60 or 60' further comprises a storage means 81 for storing all data necessary for producing the summary. This data may include the data defining the arrangement of segments for the summary but may also include the complete video data for the summary itself. A consumer interface 82 which communicates with the consumer machine interface 72 serves as an I/O port for consumer requests and responses. The video signals to be processed for creating or defining a summary are provided by a video signal interface 83.

The present invention advantageously allows to automatically define and/or create a subset of video signals representing a summary of a programme like e.g. a TV programme or a video recording of a certain genre by using the results of a key event detector and data reflecting the preferences of a particular consumer. Changes in the preferences of a consumer can be taken into account by reassessing a consumer's preferences according to modification requests obtained by the consumer.

## Claims

1. Method for defining a subset of video signals (13) from a source set of video signals (13) on the basis of meta data available for the source set of video signals (13), the metadata assigning a generic term to a subsection of the audio channel of the source set of video signals (13),
**characterized by**
a class description to one or more sub-units (21a to 21k) of the subsection for classifying the origin of the respective sub-unit, a category allocation to a segment formed by a string of one or more classified sub-units of a subsection, and a rating value to the segment for rating the reliability of the category allocation of the segment, the method comprising the following steps:
- (S01) selecting segments of a subsection with a rating value above a threshold value,
- (SO2) assigning a priority value to each category, and
- (S04) specifying a first subset of video signals (13) by defining an arrangement of selected segments by an order based on the respective priority value and rating value related to each segment.

2. Method according to claim 1,
**characterised in**
**that** the arrangement of segments in the first subset of video signals (13) is specified by order of the priority value related to each category of the segments and within a category by chronological order.

3. Method according to claim 1,
**characterised in**
**that** the arrangement of segments in the first subset of video signals (13) is specified by order of the priority value related to each category of the segments and within a category by order of the rating value assigned to the segment.

4. Method according to one of the claims 1 to 3,
**characterised in**
**that** a segment is assigned a value of importance formed by a weighting of the priority value related to the category of the segment with the rating value assigned to the segment.

5. Method according to claim 4,
**characterised in**
**that** the arrangement of segments in the first subset of video signals (13) is specified by order of importance.

6. Method according to one of the claims 1 to 5,
**characterised in**
**that** the threshold value is defined in relation to a time limit specified for the total length of the first subset of video signals (13).

7. Method according to one of the claims 1 to 6,
**characterised in**
**that** a second subset of video signals (13) is formed from the first subset of video signals (13) according to a response mark obtained from a consumer on request.

8. Method according to claim 7,
**characterised in**
**that** the priority values are recalculated on the basis of one or more response marks.

9. Method according to claim 7 or 8,
**characterised in**
**that** a consumer profile is formed on the basis of the response marks obtained from a particular consumer.

10. Automatic programme summary apparatus (60) for defining a subset of video signals (13) from a source set of video signals (13) on the basis of meta data available for the source set of video signals (13), the meta data assigning a generic term to a subsection of the audio channel of the source set of video signals (13),
**characterized by**
a class description to one or more sub-units (21a to 21k) of the subsection for classifying the origin of the respective sub-unit, a category allocation to a segment formed by a string of one or more classified sub-units of a subsection, and a rating value to the segment for rating the reliability of the category allocation of the segment, the apparatus (60, 60') comprising:
- a selecting means (62) for selecting individual segments from a subsection of the source set of video signals (13),
- a meta data reading means (63) for reading the meta data related to a selected segment,
- a priority assignment means (64) for assigning a priority value to each category,
- a decision means (65) for deciding if a selected segment is to be added to the subset of video signals (13) by evaluating the rating value of the segment with respect to a threshold value,
- a ranking means (66) for specifying the order in which the segments decided to be added to the subset of video signals (13) are to be arranged, whereby the order is based on the priority value and rating value related to each respective segment, and
- an arrangement means (67) for arranging the segments decided to be added to the subset of video signals (13) according to the order set by the ranking means.

11. Apparatus (60) according to claim 10,
**characterised in**
**that** the ranking means (66) specifies the order of arranging the segments in the subset of video signals (13) by order of the priority value related to each segment and within a category by chronological order.

12. Apparatus (60) according to claim 10,
**characterised in**
**that** the ranking means (66) specifies the order of arranging the segments in the subset of video signals (13) by order of the priority value related to each segment and within a category by order of the rating value assigned to the segment.

13. Apparatus (60) according to claim 10,
**characterised in**
**that** the ranking means (66) specifies the order of segments in the subset of video signals (13) according to a value of importance calculated by a calculation means (71) by means of weighting the priority value related to each segment with the rating value assigned to said particular segment.

14. Apparatus (60) according to claim 13, **characterised in**
**that** the ranking means (66) specifies the order of segments in the subset of video signals (13) by order of importance.

15. Apparatus (60) according to one of the claims 10 to 14,
**characterised in**
**that** the threshold value used by the decision means (65) is calculated in relation to a time limit specified for the total length of the subset of video signals (13).

16. Apparatus (60) according to one of the claims 10 to 15,
**characterised by**
a consumer-machine interface (72) for obtaining a response mark from a consumer in response to a request of the automatic programme summary apparatus (60, 60') related to the set of video signals (13).

17. Apparatus (60) according to claim 16,
**characterised by**
a restricting means (73) restricts the set of video signals (13) with respect to a response mark obtained from the consumer via the consumer-machine interface (72).

18. Apparatus (60) according to claim 17,
**characterised in**
**that** the calculation means (71) recalculates the priority values on the basis of one or more response marks.

19. Apparatus (60) according to claim 17 or 18,
**characterised by**
a profiling means (74) for creating a consumer specific consumer profile formed on the basis of the response marks obtained from a particular consumer.

20. Apparatus according to one of the claims 10 to 19,
**characterised by**
a data processing means for implementing one or more means of the automatic programme summary apparatus (60, 60,') according to one of the claims 10 to 19.

21. Software product comprising a series of commands which are adapted to be processed by a data processing means of an automatic programme summary apparatus (60, 60') according to one of the claims 10 to 19 in order to execute a method according to one of the claims 1 to 9.

## Patentansprüche

1. Verfahren zum Definieren einer Untermenge von Videosignalen (13) aus einer Quellenmenge von Videosignalen (13) auf Basis von Metadaten, die für die Quellenmenge der Videosignale (13) verfügbar sind, wobei die Metadaten einen generischen Ausdruck einem Unterabschnitt des Audiokanals der Quellenmenge der Videosignale (13) zuordnen,
**gekennzeichnet durch**
eine Klassenbeschreibung für eine oder mehrere Untereinheiten (21 a bis 21 k) für den Unterabschnitt zum Klassifizieren des Ursprungs der jeweiligen Untereinheit, eine Kategorienzuordnung zu einem Segment, das **durch** eine Kette von einer oder mehreren klassifizierten Untereinheiten eines Unterabschnittes gebildet ist, und einen Bewertungswert für das Segment zum Bewerten der Zuverlässigkeit der Kategorienzuordnung des Segments, wobei das Verfahren folgende Schritte umfasst:
(S01) Auswählen von Segmenten eines Unterabschnittes mit einem Bewertungswert, der über einem Schwellwert liegt;
(S02) Zuordnen eines Prioritätswertes zu jeder Kategorie, und
(S04) Spezifizieren einer ersten Untermenge von Videosignalen (13) **durch** Definieren einer Anordnung von ausgewählten Segmenten in einer Reihenfolge abhängig von dem jeweiligen Prioritätswert und dem Bewertungswert, der jedem Segment zugeordnet ist.

2. Verfahren nach Anspruch 1, **dadurch gekennzeichnet, dass** die Anordnung der Segmente der ersten Untermenge von Videosignalen (13) durch die Rangordnung der Prioritätswerte, die sich auf jede Kategorie der Segmente beziehen, und innerhalb einer Kategorie durch ihre zeitliche Rangordnung spezifiziert wird.

3. Verfahren nach Anspruch 1, **dadurch gekennzeichnet, dass** die Anordnung von Segmenten in der ersten Untermenge von Videosignalen (13) durch die Rangordnung der Prioritätswerte, die sich auf jede Kategorie der Segmente beziehen, und innerhalb der Kategorie durch die Rangordnung der Bewertungswerte, die dem Segment zugeordnet ist, spezifiziert wird.

4. Verfahren nach einem der Ansprüche 1 bis 3, **dadurch gekennzeichnet, dass** einem Segment ein Wichtigkeitswert zugeordnet wird, der durch eine Gewichtung des Prioritätswertes, der sich auf die Kategorie des Segmentes bezieht, mit dem Bewertungswert, der dem Segment zugeordnet ist, gebildet wird.

5. Verfahren nach Anspruch 4, **dadurch gekennzeichnet, dass** die Anordnung der Segmente in der ersten Untermenge der Videosignale (13) durch die Wichtigkeitsreihenfolge spezifiziert ist.

6. Verfahren nach einem der Ansprüche 1 bis 5, **dadurch gekennzeichnet, dass** der Schwellwert in Bezug auf eine Zeitgrenze definiert wird, die für eine Gesamtlänge der ersten Untermenge von Videosignalen (13) spezifiziert wird.

7. Verfahren nach einem der Ansprüche 1 bis 6, **dadurch gekennzeichnet, dass** eine zweite Untermenge von Videosignalen (13) aus der ersten Untermenge von Videosignalen (13) gemäß einem Antwortmarker, der auf Anfrage von einem Benutzer erhalten wird, gebildet wird.

8. Verfahren nach Anspruch 7, **dadurch gekennzeichnet, dass** die Prioritätswerte auf Basis von einem oder mehreren Antwortmarkern erneut berechnet werden.

9. Verfahren nach Anspruch 7 oder 8, **dadurch gekennzeichnet, dass** ein Benutzerprofil auf Basis der Antwortmarker, die von einem bestimmten Benutzer erhalten werden, gebildet wird.

10. Vorrichtung (60) zum automatischen Zusammenfassen von Programmen zum Definieren einer Untermenge von Videosignalen (13) von einer Quellenmenge von Videosignalen (13) auf Basis von Metadaten, die für die Quellenmenge der Videosignale (13) verfügbar sind, wobei die Metadaten einen generischen Ausdruck einem Unterabschnitt des Audiokanals der Quellenmenge der Videosignale (13) zugeordnet sind, **gekennzeichnet durch**:
eine Klassenbeschreibung für eine oder mehrere Untereinheiten (21a - 21k) des Unterabschnitts zum Klassifizieren des Ursprungs der entsprechenden Untereinheit, eine Kategorienzuordnung zu einem Segment, das **durch** eine Kette von einer oder mehreren klassifizierten Untereinheiten eines Unterabschnitts gebildet ist, und einen Bewertungswert für das Segment zum Bewerten der Zuverlässigkeit der Kategorienzuordnung des Segments, wobei die Vorrichtung (60, 60') umfasst:
eine Auswahleinrichtung (62) zum Auswählen von individuellen Segmenten von einem Unterabschnitt der Quellenmenge von Videosignalen (13),
eine Metadaten-Ausleseeinrichtung (63) zum Auslesen der Metadaten, die sich auf ein ausgewähltes Segment beziehen,
eine Prioritätszuordnungseinrichtung (64) zum Zuordnen eines Prioritätswertes zu jeder Kategorie,
eine Entscheidungseinrichtung (65) zum Entscheiden, ob ein ausgewähltes Segment der Untermenge der Videosignale (13) hinzugefügt werden soll, indem der Wertungswert des Segments mit Bezug auf einen Schwellwert bewertet wird,
einen Bewertungswert (66) zum Festlegen der Reihenfolge, in der die Segmente, von denen entschieden worden ist, dass sie der Untermenge von Videosignalen (13) hinzugefügt werden, angeordnet werden sollen, wobei die Reihenfolge auf dem Prioritätswert und dem Bewertungswert, die sich auf das entsprechende Segment beziehen, basiert, und
eine Anordnungseinrichtung (67) zum Anordnen der Segmente, von denen entschieden worden ist, dass sie der Untermenge der Videosignale (13) hinzugefügt werden sollen, gemäß der Reihenfolge, die **durch** die Bewertungseinrichtung festgelegt ist.

11. Vorrichtung (60) nach Anspruch 10, **dadurch gekennzeichnet, dass** die Bewertungseinrichtung (66) die Reihenfolge der Anordnung der Segmente in der Untermenge von Videosignalen (13) durch die Rangfolge des Prioritätswertes, die sich auf jedes Segment beziehen, und innerhalb einer Kategorie durch ihre chronologische Reihenfolge spezifiziert.

12. Vorrichtung (60) nach Anspruch 10, **dadurch gekennzeichnet, dass** die Bewertungseinrichtung (66) die Reihenfolge der Anordnung der Segmente in der Untermenge der Videosignale (13) durch die Rangfolge der Prioritätswerte, die sich auf jedes Segment beziehen, und innerhalb einer Kategorie durch die Rangfolge der Bewertungswerte, die dem Segment zugeordnet sind, spezifiziert.

13. Vorrichtung (60) gemäß Anspruch 10, **dadurch gekennzeichnet, dass** die Bewertungseinrichtung (66) die Reihenfolge der Segmente in der Untermenge von Videosignalen (13) gemäß einem Wichtigkeitswert spezifiziert, der durch eine Berechnungseinrichtung (71) mit Hilfe der Gewichtung des Prioritätswertes, der sich auf jedes Segment bezieht, mit dem Bewertungswert, der dem bestimmten Segment zugeordnet ist, berechnet wird.

14. Vorrichtung (60) gemäß Anspruch 13, **dadurch gekennzeichnet, dass** die Bewertungseinrichtung (66) die Reihenfolge von Segmenten in der Untermenge von Videosignalen (13) durch die Rangfolge der Wichtigkeit spezifiziert.

15. Vorrichtung (60) nach einem der Ansprüche 10 bis 14, **dadurch gekennzeichnet, dass** der Schwellwert, der von der Entscheidungseinrichtung (65) verwendet wird, mit Bezug auf eine Zeitgrenze, die für die Gesamtlänge der Untermenge der Videosignale (13) spezifiziert ist, berechnet wird.

16. Vorrichtung (60) gemäß einem der Ansprüche 10 bis 15, **gekennzeichnet durch** eine Benutzer-Maschinen-Schnittstelle (62) zum Erhalten eines Antwortmarkers von einem Benutzer als Antwort auf eine Anfrage der Vorrichtung (60, 60') zur automatischen Zusammenfassen von Programmen mit Bezug auf die Menge von Videosignalen (13).

17. Vorrichtung (60) gemäß Anspruch 16, **gekennzeichnet durch** eine Beschränkungseinrichtung (63) zum Beschränken der Menge von Videosignalen (13) mit Bezug auf einen Antwortmarker, der von einem Benutzer über die Benutzer-Maschinen-Schnittstelle (62) erhalten wird.

18. Vorrichtung (60) nach Anspruch 17, **dadurch gekennzeichnet, dass** die Berechnungseinrichtung (71) die Prioritätswerte anhand eines oder mehrerer Antwortmarker erneut berechnet.

19. Vorrichtung (60) gemäß Anspruch 17 oder 18, **gekennzeichnet durch** eine Profiling-Einrichtung (64) zum Erzeugen eines benutzerspezifischen Benutzerprofils, das auf Basis der Antwortmarker, die von einem bestimmten Benutzer erhalten werden, gebildet ist.

20. Vorrichtung nach einem der Ansprüche 10 bis 19, **gekennzeichnet durch** eine Datenverarbeitungseinrichtung zum Implementieren einer oder mehrerer Einrichtungen für die Vorrichtung (60, 60') zum automatischen Zusammenfassen von Programmen gemäß einem der Ansprüche 10 bis 19.

21. Softwareprodukt umfassend eine Reihe von Befehlen, die ausgebildet sind, durch eine Datenverarbeitungseinrichtung einer Vorrichtung (60, 60') zum automatischen Zusammenfassen von Programmen gemäß einem der Ansprüche 10 bis 19 verarbeitet zu werden, um ein Verfahren gemäß einem der Ansprüche 1 bis 9 auszuführen.

## Revendications

1. Procédé permettant de définir un sous-ensemble de signaux vidéo (13) provenant d'un ensemble source de signaux vidéo (13) sur la base de métadonnées disponibles pour l'ensemble source de signaux vidéo (13), les métadonnées attribuant un terme générique à une sous-section du canal audio de l'ensemble source de signaux vidéo (13),
**caractérisé par**
une description de classe pour une ou plusieurs sous-unités (21a à 21k) de la sous-section pour classifier l'origine de la sous-unité respective, une allocation de catégorie pour un segment formé par une chaîne d'une ou de plusieurs sous-unités classifiées d'une sous-section, et une valeur d'indice pour le segment pour indexer la fiabilité de l'allocation de catégorie du segment, le procédé comprenant les étapes suivantes :
- (S01) sélectionner des segments d'une sous-section avec une valeur d'indice au-dessus d'une valeur de seuil,
- (S02) attribuer une valeur de priorité à chaque catégorie, et
- (S04) spécifier un premier sous-ensemble de signaux vidéo (13) en définissant un agencement de segments sélectionnés par un ordre sur la base de la valeur de priorité respective et de la valeur d'indice, liées à chaque segment.

2. Procédé selon la revendication 1, **caractérisé en ce que** l'agencement de segments dans le premier sous-ensemble de signaux vidéo (13) est spécifié dans l'ordre de la valeur de priorité liée à chaque catégorie des segments, et à l'intérieur d'une catégorie, par ordre chronologique.

3. Procédé selon la revendication 1, **caractérisé en ce que** l'agencement de segments dans le premier sous-ensemble de signaux vidéo (13) est spécifié dans l'ordre de la valeur de priorité liée à chaque catégorie des segments, et à l'intérieur d'une catégorie, dans l'ordre de la valeur d'indice attribuée au segment.

4. Procédé selon l'une quelconque des revendications 1 à 3, **caractérisé en ce que** l'on attribue à un segment une valeur d'importance formée par une pondération de la valeur de priorité liée à la catégorie du segment avec la valeur d'indice attribuée au segment.

5. Procédé selon la revendication 4, **caractérisé en ce que** l'agencement de segments dans le premier sous-ensemble de signaux vidéo (13) est spécifié par ordre d'importance.

6. Procédé selon l'une quelconque des revendications 1 à 5, **caractérisé en ce que** la valeur de seuil est définie en relation avec une limite de temps spécifiée pour la longueur totale du premier sous-ensemble de signaux vidéo (13).

7. Procédé selon l'une quelconque des revendications 1 à 6, **caractérisé en ce qu'**un deuxième sous-ensemble de signaux vidéo (13) est formé à partir du premier sous-ensemble de signaux vidéo (13) selon un signe de réponse obtenu d'un utilisateur à la demande.

8. Procédé selon la revendication 7, **caractérisé en ce que** les valeurs de priorité sont recalculées sur la base d'un ou de plusieurs signes de réponse.

9. Procédé selon la revendication 7 ou 8, **caractérisé en ce qu'**un profil d'utilisateur est formé sur la base des signes de réponse obtenus d'un utilisateur particulier.

10. Appareil de résumé de programme automatique (60) permettant de définir un sous-ensemble de signaux vidéo (13) provenant d'un ensemble source de signaux vidéo (13) sur la base de métadonnées disponibles pour l'ensemble source de signaux vidéo (13), les métadonnées attribuant un terme générique à une sous-section du canal audio de l'ensemble source de signaux vidéo (13),
**caractérisé par**
une description de classe pour une ou plusieurs sous-unités (21a à 21k) de la sous-section pour classifier l'origine de la sous-unité respective, une allocation de catégorie pour un segment formé par une chaîne d'une ou de plusieurs sous-unités classifiées d'une sous-section, et une valeur d'indice pour le segment pour indexer la fiabilité de l'allocation de catégorie du segment, l'appareil (60, 60') comprenant :
- des moyens de sélection (62) pour sélectionner des segments individuels à partir d'une sous-section de l'ensemble source de signaux vidéo (13),
- des moyens de lecture de métadonnées (63) pour lire les métadonnées liées à un segment sélectionné,
- des moyens d'attribution de priorité (64) pour attribuer une valeur de priorité à chaque catégorie,
- des moyens de décision (65) pour décider si un segment sélectionné doit être ajouté au sous-ensemble de signaux vidéo (13) en évaluant la valeur d'indice du segment concernant une valeur de seuil,
- des moyens de classement (66) pour spécifier l'ordre dans lequel les segments décidés comme étant à ajouter au sous-ensemble de signaux vidéo (13) doivent être agencés, de manière à ce que l'ordre soit basé sur la valeur de priorité et la valeur d'indice liées à chaque segment respectif, et
- des moyens d'agencement (67) pour agencer les segments décidés comme étant à ajouter au sous-ensemble de signaux vidéo (13) selon l'ordre établi par les moyens de classement.

11. Appareil (60) selon la revendication 10, **caractérisé en ce que** les moyens de classement (66) spécifient l'ordre de l'agencement des segments dans le sous-ensemble de signaux vidéo (13) dans l'ordre de la valeur de priorité liée à chaque segment, et à l'intérieur d'une catégorie, par ordre chronologique.

12. Appareil (60) selon la revendication 10, **caractérisé en ce que** les moyens de classement (66) spécifient l'ordre de l'agencement des segments dans le sous-ensemble de signaux vidéo (13) dans l'ordre de la valeur de priorité liée à chaque segment, et à l'intérieur d'une catégorie, dans l'ordre de la valeur d'indice attribuée au segment.

13. Appareil (60) selon la revendication 10, **caractérisé en ce que** les moyens de classement (66) spécifient l'ordre des segments dans le sous-ensemble de signaux vidéo (13) selon une valeur d'importance calculée par des moyens de calcul (71) au moyen d'une pondération de la valeur de priorité liée à chaque segment avec la valeur d'indice attribuée audit segment particulier.

14. Appareil (60) selon la revendication 13, **caractérisé en ce que** les moyens de classement (66) spécifient l'ordre des segments dans le sous-ensemble de signaux vidéo (13) par ordre d'importance.

15. Appareil (60) selon l'une quelconque des revendications 10 à 14, **caractérisé en ce que** la valeur de seuil utilisée par les moyens de décision (65) est calculée par rapport à une limite de temps spécifiée pour la longueur totale du sous-ensemble de signaux vidéo (13).

16. Appareil (60) selon l'une quelconque des revendications 10 à 15, **caractérisé par** une interface utilisateur/machine (72) pour obtenir un signe de réponse d'un utilisateur en réponse à une demande de l'appareil de résumé de programme automatique (60, 60'), lié à l'ensemble de signaux vidéo (13).

17. Appareil (60) selon la revendication 16, **caractérisé par** des moyens de restriction (73) qui restreignent l'ensemble de signaux vidéo (13) concernant un signe de réponse obtenu de l'utilisateur par l'intermédiaire de l'interface utilisateur/ machine (72).

18. Appareil (60) selon la revendication 17, **caractérisé en ce que** les moyens de calcul (71) recalculent les valeurs de priorité sur la base d'un ou de plusieurs signes de réponse.

19. Appareil (60) selon la revendication 17 ou 18, **caractérisé par** des moyens de création de profil (74) pour créer un profil d'utilisateur spécifique à un utilisateur, formé sur la base des signes de réponse obtenus d'un utilisateur particulier.

20. Appareil selon l'une quelconque des revendications 10 à 19, **caractérisé par** des moyens de traitement de données pour mettre en oeuvre un ou plusieurs moyens de l'appareil de résumé de programme automatique (60, 60') selon l'une quelconque des revendications 10 à 19.

21. Produit logiciel comprenant une série de commandes qui sont adaptées pour être traitées par des moyens de traitement de données d'un appareil de résumé de programme automatique (60, 60') selon l'une quelconque des revendications 10 à 19 afin d'exécuter un procédé selon l'une quelconque des revendications 1 à 9.
